# EUROPEAN PATENT APPLICATION

(11) **EP 4 407 840 A1**
(43) Date of publication of application: **31.07.2024**
(21) Application number: 23153857.0
(22) Date of filing: 30.01.2023
(51) Int. Cl.: H02K 1/2791, H02K 7/102, H02K 7/18, F16D 65/12

(54) **ELECTRIC GENERATOR FOR A WIND TURBINE, COMPONENT FOR AN ELECTRIC GENERATOR FOR A WIND TURBINE AND WIND TURBINE**

(71) Applicant: Siemens Gamesa Renewable Energy A/S, 7330 Brande (DK)
(72) Inventor: Jensen, Simon Vyff, 7160 Tørring (DK); R.Krishnan, Hari, 695004 Trivandrum (IN)
(74) Representative: SGRE-Association

(57) **Abstract**

Electric generator for a wind turbine (1), comprising at least one brake support plate (23) having at least one braking arrangement (21) mounted thereon, a rotor (11) which is rotatably mounted with respect to the brake support plate (23), wherein the at least one braking arrangement (21) is adapted to interact with at least one brake disk (22) which is attached to the rotor (11) to brake a relative rotation between the rotor (11) and the at least one brake support plate (23), wherein an airgap securing element (33) is mounted on the brake support plate (23) and adapted to get in contact with the at least one brake disk (22) if a distance between the at least one brake disk (22) and the brake support plate (23) and/or between a stator (10) of the electric generator (7) and the rotor (11) is reduced below a predetermined reference value, wherein the at least one airgap securing element (33) is mounted on or is a part of the at least one braking arrangement (21).

## Description

The present invention is related to an electric generator for a wind turbine, comprising at least one brake support plate having at least one braking arrangement mounted thereon, a rotor which is rotatably mounted with respect to the brake support plate, wherein the at least one braking arrangement is adapted to interact with at least one brake disk which is attached to the rotor to brake a relative rotation between the rotor and the at least one brake support plate, wherein an airgap securing element is mounted on the brake support plate and adapted to get in contact with the at least one brake disk if a distance between the at least one brake disk and the brake support plate and/or between a stator of the electric generator and the rotor is reduced below a predetermined reference value.

Particularly for maintenance purposes, it can be necessary to brake, i.e., to slow down or to lock, the rotation of the electric generator of a wind turbine. The rotation of respective components of the electric generator and/or of the wind turbine itself can cause a danger for service personnel working in the vicinity of these components. Hence, braking systems for generators of wind turbines for decelerating and/or locking the rotation or movement of these components are required. For this purpose, the braking arrangement, which is typically mounted on the non-rotatable brake support plate, is provided.

Another aspect regarding modern wind turbines is that an airgap securing system is required. Wind turbines typically comprise a hub with several blades, wherein the hub is mounted such that it can rotate about a rotation axis. The wind-driven rotation of the hub is transferred to the electric generator or the rotor of the electric generator, respectively. Between the rotor and the stator, an airgap is provided, particularly with a height of a few millimetres. Particular in the case of heavy shifting loads which might be caused by wind gusts, large turbulences or a damage of a bearing of the electric generator, the relative position between the rotor and the stator could change which leads to a change of the height of the airgap. In extreme cases, the height of the airgap could become zero, i.e., the airgap closes such that the stator and the rotor get in direct contact with each other. This potentially causes a damage of the stator and/or rotor. Hence, the presence of the airgap has to be ensured. For this, the airgap securing element is provided, which is arranged on the brake support plate to ensure that even in the case of heavy conditions an at least small airgap is kept. Examples for respective braking systems and airgap securing systems are disclosed in EP 2 976 711 A1 and EP 2 747 252 A1.

It is an object of the present invention to realize an enhanced system regarding a braking system and an airgap securing system for wind turbines, particularly with respect to a compact design.

The object is solved by an electric generator as initially described, wherein the at least one airgap securing element is mounted on or is a part of the at least one braking arrangement.

According to the present invention, the brake support plate is used for realizing several purposes. On the one hand, the brake support plate acts as the component where the braking arrangement is mounted on. On the other hand, the brake support plate acts as a carrier for the airgap securing element. The brake support plate can be disk-like and is preferably non-rotatably mounted in the electric generator. The brake support plate can be made of a metal, particularly of steel. The brake support plate can have several, particularly three, flange like plate wings, wherein one braking arrangement is mounted on each of the plate wings. As it will be described later in more detail, the brake support plate can be a component of the stator of the electric generator. Alternatively, the brake support plate is a separate component regarding the stator. In this embodiment, the brake support plate and the stator can be mounted on a common and non-rotatably shaft of the electric generator.

The brake disk can be a ring-like component. It can be attached to the rotor, particularly on a flange on its axial front face. The brake disk can be made of metal.

The stator can be an inner stator and the rotor can be an outer rotor, i.e., the rotor can be called as an external rotor. At least a part of the external rotor extends along a section of the electric generator which is located radially outwards of the stator. The rotor is rotatably mounted with respect to a rotation axis. The stator can be cylindrically shaped and the rotor can comprise the shape of a hollow cylinder. The central axes of the respective cylinders are preferable identical and are also identical with a rotational axis of the rotor. Hence, the rotational axis extends along a longitudinal or axial direction of the stator, the rotor and/or the electric generator, respectively. In this embodiment, the air gap also comprises the shape of a hollow cylinder being arranged between the stator and the rotor.

Regarding the definitions of directions, the direction pointing perpendicular away from the rotation axis can be defined as a radial direction. The direction pointing perpendicular away from the radial direction into the direction a point of the rotor which rotates about the rotation axis can be defined as a circumferential direction. The rotation axis of the rotor can extend along the main shaft of the wind turbine.

The electric generator can be a permanent-magnet generator with a plurality of permanent magnets on the rotor and an electric circuit which is realized by a plurality of stator windings which form coils and which are arranged on the stator. The rotation of the rotor causes a change of the magnetic field in the wires of the stator windings which in turn causes an electric current. Assuming that the electric generator is provided in a wind turbine, the wind-driven rotation of the rotor causes the electric current in the electric circuit which is used for energy or power generation. The output power of the electric generator can be in the range of multi-megawatts, particularly between 1 and 40 megawatts.

The electric generator can be a direct-drive generator. In this embodiment, the wind turbine or generator is gearless, meaning that a gearbox is substituted by the electric generator being a multipolar generator which preferably constitutes a synchronous generator.

As it has been described before, under certain conditions, e.g., under heavy loads acting on the components of the electric generator, the relative radial position between the stator and the rotor and, hence, between the brake disk and the brake support plate can change. Hence, the width of the airgap can change, wherein, in extreme cases, the width of the airgap could become zero such that the rotor and the stator get in contact with each other which could cause a damage of the respective components. To avoid this, the airgap securing element is provided which acts as a bearing element which gets in contact with the brake disk if the width of the airgap and/or the radial distance between the brake disk and the brake support plate is reduced below the predetermined reference value. In this case, a frictional contact between the airgap securing element and the brake disk occur. Once the airgap securing element is in contact with the brake disk, other components of the stator and the rotor cannot get in contact because a further decrease of the width of the airgap is prohibited. Hence, the airgap securing element acts as a guiding means for the brake disk and, hence, for the rotor if the width of the airgap is reduced below the predetermined reference value. The predetermined reference value can be a value such that a contact between the components of the stator and of the rotor is safely prevented. The airgap securing element is made of a material, particularly of cast iron or a plastic material, which withstands the frictional contact with the brake disk and which is adapted to be abraded.

According to the present invention, the airgap securing element can be mounted on the braking arrangement such that the element(s) of the airgap securing system and the element(s) of the braking system are, on the one hand, separate components but, on the other hand, realize a common device or assembly. Alternatively, the airgap securing element can be a part of the braking arrangement, particularly a functional component of the braking arrangement. In both embodiments, a compact design of the respective system can be realized and, particularly for the second embodiment, the number of the respective components and/or the total weight of the generator can be reduced.

According to a preferred embodiment of the present invention, the at least one braking arrangement comprises two caliper brackets having a part of the brake disk in between and being adapted to frictionally interact with the brake disk to brake the relative rotation between the rotor and the at least one brake support plate. Each of the caliper brackets preferably comprise a lateral side which points towards the respective lateral side of the other caliper bracket and to the brake disk. On this side, a brake pad can be arranged. The caliper brackets can be moved towards each other along the longitudinal direction such that the distance between the caliper brackets decreases. Since the brake disk is located between the caliper brackets, this movement causes the frictional interaction between the caliper brackets and/or the braking pads, respectively, to brake, i.e., to reduce or to slow down or to lock, the relative rotation between the rotor and the brake support plate or stator, respectively.

Preferably, the at least one braking arrangement can comprise a spacer element for securing a specified distance between the caliper brackets. The spacer element can be located between the caliper brackets and, regarding the radial direction, below the brake disk. The spacer element ensures that, regarding the axial direction, the distance between the caliper brackets is as desired and that the required position of the caliper brackets with respect to the brake disk is ensured. The spacer element can be block-like and comprise the shape of a, particularly bent, cuboid. The extension of the spacer element regarding the longitudinal direction can be slightly smaller than the extension of the brake disk regarding the longitudinal direction to allow the frictional interaction between the caliper brackets and the brake disk.

At least one component of at least one of the at least one braking arrangement, particularly the caliper brackets and/or the spacer element, can be mounted to the brake support plate by a, particularly towards the respective brake support plate broadening, foot element which comprises at least one, particularly wing-shaped, carrier element, wherein a shoe element is arranged on the carrier element and the at least one airgap securing element is mounted on or is at least a part of the shoe element. The foot element of the braking arrangement can comprise a base section, wherein the base section is attached to the at least one brake support plate, particularly by a welding- and/or bolting- and/or screwing-connection. The cross section of the foot element or of the base section can diverge towards the brake support plate such that the side of the foot element which is attached to the brake support plate realizes a large contact area between the brake support plate and the foot element. Particularly, the base section can be attached to an attaching plate which is attached to the brake support plate. The attaching plate and the base section can be made of one piece.

The carrier element can be arranged on the base section. The carrier element can extend along the axial direction. The shoe element can be arranged on the end of the carrier element opposed to the end of the carrier element which is arranged at the foot element. The shoe element can extend along the radial direction.

In a preferred embodiment of the invention, the at least one of the at least one airgap securing element is block-like and realized by the spacer element and/or by the shoe element. Regarding the embodiment where the airgap securing element is realized by the spacer element, the brake disk is located between the caliper brackets such that an inner circumferential surface of the brake disk faces the spacer element. Regarding the embodiment where the airgap securing element is realized by the shoe element, the inner circumferential surface of the brake disk faces the shoe element. Hence, if the width of the airgap changes, the distance between the inner circumferential surface of the brake disk and the spacer element or the shoe element, respectively, changes as well. The spacer element being the airgap securing element synergetically acts as a functional component of the airgap securing system and of the braking system. To ensure a sufficient lifetime of the spacer element or the shoe element, this component can be made of cast iron.

Regarding the embodiment where the at least one airgap securing element is mounted on the spacer element or the shoe element, at least one of the at least one airgap securing element can be stripe-like and arranged along an axial direction of a radial outer surface of the spacer element or of the shoe element. The axial direction of the radial outer surface extends particularly along the circumferential direction. The the airgap securing element is arranged between the brake disk and the spacer element or the shoe element, respectively, to ensure that the inner circumferential surface of the brake disk does not get in contact with the spacer element or the shoe element, respectively. Regarding their longitudinal directions, the width of the stripe-like airgap securing element and of the radial outer surface can be equal. The spacer element or the shoe element, respectively, can comprise a slit on its radial outer surface in which at least a part of the stripe-like airgap securing element is arranged.

A locking member can be arranged on one of the axial ends of the radial outer surface, wherein at least one of the at least one airgap securing element can be attached to the spacer element or to the shoe element by the locking member on one of its axial ends. The locking member can be attached to a lateral surface of the spacer element or of the shoe element, respectively, which extends along the circumferential and radial direction, particularly on the radial outer end of the lateral surface.

Concretely, two locking members being locking brackets can be arranged at two opposed axial ends of the radial outer surface, wherein the locking brackets attach the at least one airgap securing element at these positions to the spacer element or to the shoe element. Each of the locking brackets can comprise a slit having the respective axial end of the stripe-like airgap securing element clamped in. Each of the locking brackets can be a steel- or iron sheet which can be attached to the lateral surface of the spacer element or the shoe element, respectively, exemplarily by a screwing connection. Each of the locking brackets can protrude along the radial direction into the region located above the radial outer surface of the spacer element or the shoe element, respectively.

Alternatively, one locking member being a locking bracket can be arranged at one of the two opposed axial ends of the radial outer surface which is directed away from a leading side regarding the rotation of the rotor. In this embodiment, the frictional contact between the airgap securing element and the brake disk which occurs when the predetermined reference value is underran causes a tensile-load acting on the respective attaching position of the airgap securing element along the circumferential direction.

Alternatively, one locking member being a stopper for blocking a movement of the at least one airgap securing element along the circumferential direction of the rotor can be arranged at one of the two opposed axial ends of the radial outer surface which is directed towards a leading side regarding the rotation of the rotor. In this embodiment, an axial front face of the airgap securing element is in contact with the stopper such that a movement of the airgap securing element along the circumferential direction and, hence, out of its designated position on the spacer element or on the shoe element, caused by the frictional contact is prohibited. Hence, in this embodiment, the frictional contact between the airgap securing element and the brake disk causes a compression-load acting on the respective attaching position of the airgap securing element along the circumferential direction.

Since the width of the airgap and, hence, the distance between the inner circumferential surface of the brake disk and the airgap securing element is in the order of a few millimetres, it is a challenging task to accurately adjust the radial position of the airgap securing element.

Regarding the embodiment having the stripe-like airgap securing element arranged on the radial outer surface of the spacer element or the shoe element, between at least one of the at least one airgap securing element and the radial outer surface at least one shim can be arranged such that the at least one airgap securing element is arranged at a designated radial position. For the mounting process of the electric generator, several shims having different thicknesses can be provided. During or after the airgap securing element has been arranged on the radial outer surface, the shim having the thickness such that the airgap securing element is arranged in the correct radial position can be arranged between the airgap securing element and the radial outer surface of the spacer element or of the shoe element. The shim can be stripe- or plate-like and particularly made of a metal or plastic. Several shims can be arranged adjacently, particularly with respect to the circumferential and/or the radial direction.

The radial outer surface can comprise at least one groove extending along the axial direction of the radial outer surface, wherein the at least one airgap securing element comprises at least one tongue being arranged in the at least one groove, wherein the cross sections of the at least one groove and the at least one tongue correspond to each other. The tongue being arranged in the groove ensures that the relative position between the radial outer surface and the airgap securing element is automatically achieved during the manufacturing process just by inserting the tongue into the groove. For arranging the airgap securing element on the radial outer surface, the airgap securing element can be moved along its axial direction to insert the tongue into the groove.

The cross sections of the at least one groove and of the at least one tongue can be dovetail-shaped. Hence, these cross sections get broader downwards along the radial direction. This broadening causes an attachment of the airgap securing element on the spacer element regarding the radial direction.

As it has been already mentioned, it is a challenging task to accurately adjust the radial position of the airgap securing element. To overcome this problem, regarding a first possible embodiment, a radial inner surface of the spacer element can be arranged on a bearing surface of the at least one braking arrangement. Regarding a second possible embodiment, a radial inner surface of the shoe element can be arranged on a bearing surface of the carrier element. In both alternatives, the bearing surface or the radial inner surface comprises at least one drill hole having an internal thread and a screw arranged therein, wherein the radial position of the airgap securing element is adjustable by screwing the screw. The internal thread of the drill hole corresponds to an external thread of the screw such that screwing the screw leads to a change of its radial position. A part of the screw protrudes from the bearing surface or the radial inner surface, respectively. Hence, the radial distance between the inner surface and the bearing surface and, hence, the distance between a radial outer surface of the spacer element or of the shoe element, respectively, and the inner circumferential surface of the brake disk is adjustable by the length of the protruding part of the screw. The screw can be a grub screw.

At least one of the at least one airgap securing element, particularly the block-like airgap securing element, can be made of cast iron. At least one of the at least one airgap securing element, particularly the stripe-like airgap securing element, can be made of a plastic material.

Regarding a possible embodiment of the present invention, the stator is an inner stator and the rotor can be a rotatably mounted outer rotor, wherein the at least one brake support plate is one of several laminated stator plates which constitute an iron core of the stator. In this embodiment, stator comprises several laminated stator plates which constitute the iron core of the stator. The stator plates and, hence, the stator, can comprise a plurality of teeth which protrude outwards with respect to the radial direction, wherein two adjacent teeth laterally delimit a slot, wherein sections of the stator windings which extend along a longitudinal direction of the stator are arranged within the slots.

Preferably, the at least one brake support plate is at least one axial end plate of the iron core. The brake support plate realizes an axial front- or end face of the stator. Preferably, the braking arrangement is attached on the respective axial end face. Alternatively, the at least one brake support plate is at least one axial central plate of the iron core. In this embodiment the brake support plate is located between two further stator plates in the axial direction. In this embodiment, the braking members are can be arranged on a circumferential surface of the brake support plate.

If the electric generator is a direct-drive generator, one of the at least one brake support plate can be a non-drive end of the stator plate. In this embodiment, the stator comprises a drive end and the non-drive end which constitute opposite axial end- or front faces of the stator and which extend along the radial direction. The drive end can be tapered with respect to the radial direction. The drive end faces the main shaft which connects the rotor of the electric generator with a rotor of the wind turbine. However, basically it is also possible that one of the at least one brake support plate is the drive end stator plate.

Regarding another possible embodiment of the present invention, the stator can be the inner stator and the rotor can be the rotatably mounted outer rotor, wherein the at least one brake support plate is a separate component with respect to the stator. the brake support plate and the stator can be mounted on a common shaft of the electric generator. The common shaft can be non-rotatably with respect to stationary components of the electric generator, particularly with respect to a housing having the stator and rotor arranged therein.

Component, particularly inner stator, for an electric generator for a wind turbine, comprising at least one brake support plate having at least one braking arrangement mounted thereon, wherein the at least one braking arrangement is adapted to interact with at least one brake disk which is attached to a rotor of the electric generator which is rotatably mounted with respect to the brake support plate to brake a relative rotation between the rotor and the at least one brake support plate, wherein an airgap securing element is mounted on the brake support plate and adapted to get in contact with the at least one brake disk if a distance between the at least one brake disk or the stator and the rotor is reduced below a predetermined reference value. The component is characterized in that the at least one airgap securing element is mounted on or a part of the at least one braking arrangement. Particularly, the component according to the present invention is an inner stator of the electric generator. All advantages and features of the electric generator according to the present invention can be transferred to the component according to the present invention and vice versa.

Additionally, the present invention is related to a wind turbine, comprising at least one electric generator according to the description above. All advantages and features of the electric generator according to the present invention and of the component according to the present invention can be transferred to the wind turbine according to the present invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show schematically:
- Fig. 1: a view of a wind turbine according to an embodiment of the present invention, comprising an electric generator according to an embodiment of the present invention,
- Fig. 2: a view of a radial cut through the electric generator of the wind turbine of fig. 1, comprising a component according to an embodiment of the present invention, namely an inner stator, wherein the cutting line is indicated by II - II in fig. 1,
- Fig. 3: a view of a longitudinal cut through the electric generator of the wind turbine of fig. 1 according to a first possible embodiment,
- Fig. 4: an enlarged view of a section of the generator of fig. 3 which is indicated by IV in fig. 3,
- Fig. 5: a view of a longitudinal cut through the electric generator of the wind turbine of fig. 1 according to a second possible embodiment,
- Fig. 6: an enlarged view of a braking arrangement of the electric generator of fig. 3 according to a first alternative,
- Fig. 7: an enlarged view of a braking arrangement of the electric generator of fig. 3 according to a second alternative,
- Fig. 8: an enlarged view of a braking arrangement of the electric generator of fig. 3 according to a third alternative,
- Fig. 9: a cross-sectional view through the braking arrangement of the electric generator of fig. 8, and
- Fig. 10: an enlarged view of a braking arrangement of the electric generator of fig. 3 according to a fourth alternative.

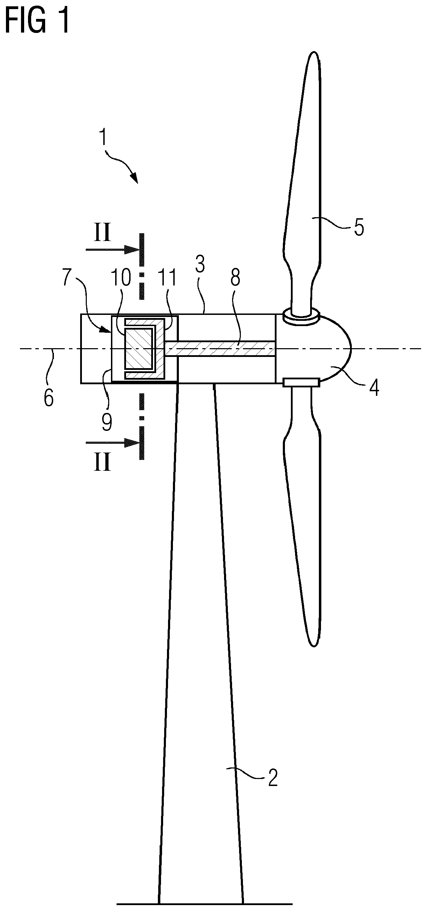

Fig. 1 shows a wind turbine 1 according to an embodiment of the present invention. The wind turbine 1 comprises a tower 2 on which a nacelle 3 is arranged. On the front of the nacelle 3, a hub 4 with several, particularly three, blades 5 is provided. The hub 4 is mounted such that it can rotate about a rotation axis 6. The wind-driven rotation of the hub 4 is transferred to an electric generator 7 according to an embodiment of the present invention which is located in the nacelle 3. The rotation of the hub 4 is transferred to the electric generator 7 by a main shaft 8 which extends along the rotation axis 6. The rotation axis 6 defines an axial direction of the wind turbine 1 and the generator 7. The rotation axis 6 is arranged horizontally but can be also tilted with respect to the horizontal direction. While the total height of the wind turbine 1 is in the order of tens or hundreds of meters, the output power of the wind turbine 1 which is generated by the generator 7 can be in the range of multi-megawatts, particularly between 1 and 40 megawatts.

The electric generator 7 comprises an inner stator 10 being a component according to an embodiment of the present invention and an outer rotor 11. The stator 10 and the rotor 11 are arranged within a housing 9 of the generator 7. While the stator 10 is non-rotatably mounted, the rotor 11 is connected with the main shaft 8 such that the rotation of the hub 4 is transferred to the rotor 11. Hence, the rotor 11 can rotate about the rotation axis 6.

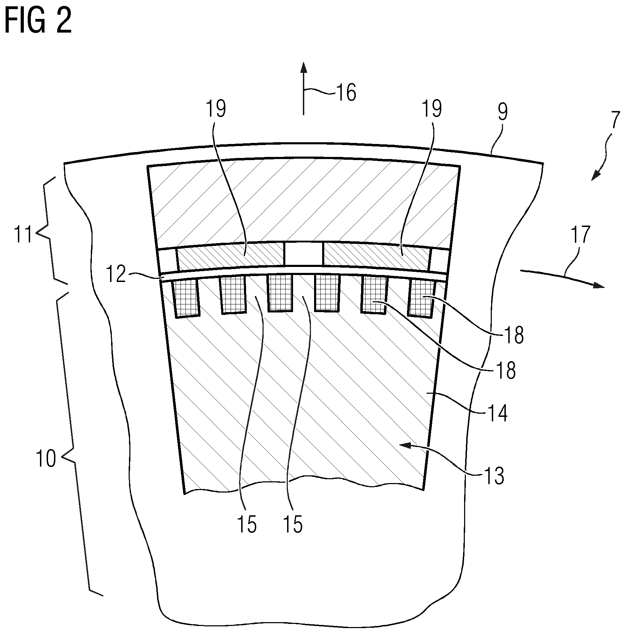

Fig. 2 shows a cross-section through a segment of the electric generator 7, wherein the sectional plane is perpendicular to the rotation axis 6. An airgap 12 with a thickness of a few millimetres is arranged between the cylindrical stator 10 and the hollow-cylindrical rotor 11. The stator 10 comprises an iron core 13 with several laminated stator plates 14. The stator plates 14 are arranged perpendicular to the rotation axis 6 such that the stack being the iron core 13 extends along the rotation axis 6. The stator plates 14 and, hence, the iron core 13 comprise a plurality of teeth 15 which protrude into a radial direction 16 which extends perpendicularly outwards from the rotation axis 6. The teeth 15 are evenly spaced along a circumferential direction 17 which is defined as the direction pointing perpendicular away from the radial direction 16 into the direction a point of the rotor 11 rotates about the rotational axis 6. Two adjacent teeth 15 laterally delimit a slot, wherein stator windings 18 for realizing coils are arranged within the slots. The windings 18 comprise end-windings 20 (not shown in fig. 2), which have a curved shape each and which connect the windings 18 of several, particularly adjacent, slots.

The rotor 11 comprises permanent magnets 19, which are arranged evenly spaced along the circumferential direction 17. The permanent magnets 19 of the rotating rotor 11 and the windings 18 of the stator 10 electromagnetically interact with each other such that a current is induced in the windings 18 and in turn a power output of the generator 7 is realized.

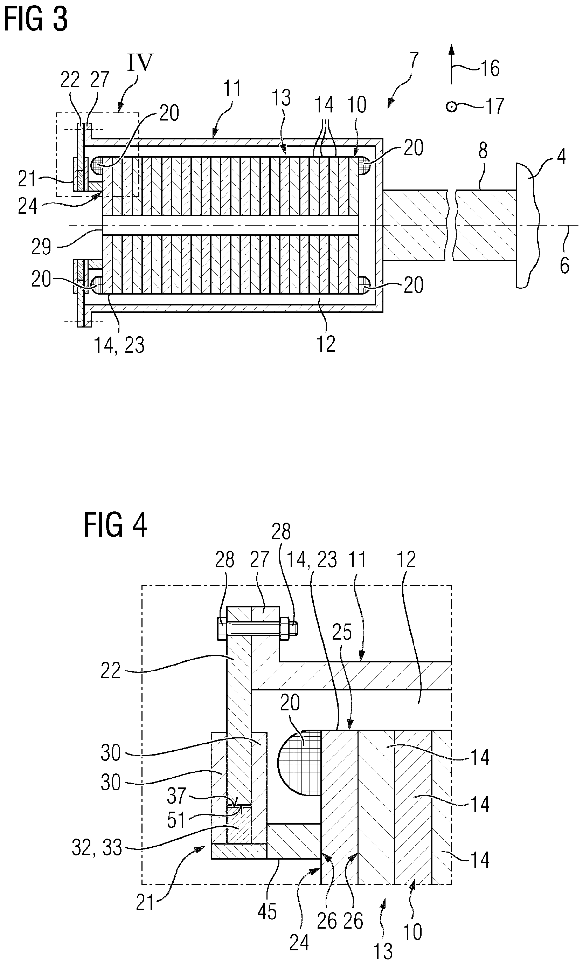

Next, it is referred to figures 3 and 4. Fig. 3 shows a longitudinal cut through the electric generator 7 along the rotation axis 6. Fig. 4 shows an enlarged part of fig. 3, which is indicated in by the box IV. The housing 9 is not shown in figures 3 and 4.

Several braking arrangements 21 are attached to the inner stator 10. A brake disk 22 is attached to the outer rotor 11. The braking arrangements 21 are adapted to interact with the brake disk 22 to brake or, in other words, to slow down or decelerate the rotation of the rotor 11 and, hence, the components which are connected to the rotor 11 like the main shaft 8 and the hub 4. Typically, if maintenance work has to be performed, the rotation of the hub 4, the main shaft 8 and the rotor 11 has to be stopped to avoid danger of the respective service personnel. For stopping the rotation, in a first step, the tiling angle of each of the blades 5 is adjusted such that air dynamic effects lead to a deceleration of the rotation. Once, the respective rotation frequency falls below a certain value, in a second step, the braking arrangements 21 are activated to decelerate the rotation down to zero and, in a third step, to finally lock the rotation of the nonrotating rotor 11.

The braking arrangement 21 is arranged and attached on a brake support plate 23 which is constituted by one of the stator plates 14, in the present embodiment exemplarily by an axial end plate of the iron core 13 which realizes a non-drive end stator plate of the electric generator 7 being a direct-drive generator. Hence, the brake support plate 23 realizes an axial front face 24 of the iron core 13 which is opposed to the front end of the iron core 13 which faces the main shaft 8 and the hub 4.

The brake support plate 23 has a geometrical shape of a flat cylinder with a circularly bent outer circumferential surface 25 and two circular end plane axial front faces 26, wherein one of the front faces 26 constitute the axial front face 24 of the iron core 13. The braking arrangements 21 are attached at an outer radial end of the brake support plate 23.

The stator 11 has the shape of a hollow cylinder with the rotation axis 6 as the centre line, wherein on the front face of the rotor 11 opposed to the main shaft 8, a flange 27 is provided. The circular and ring-shaped brake disk 22 is attached to the flange 27 by screwing means 28.

As can be seen particularly from figures 3 and 4, the braking arrangements 21 extend radially outwards and the brake disk 22 radially inwards such that one section of each of the braking arrangements 21 and one section of the brake disk 22 are arranged adjacently to each other with respect the axial direction.

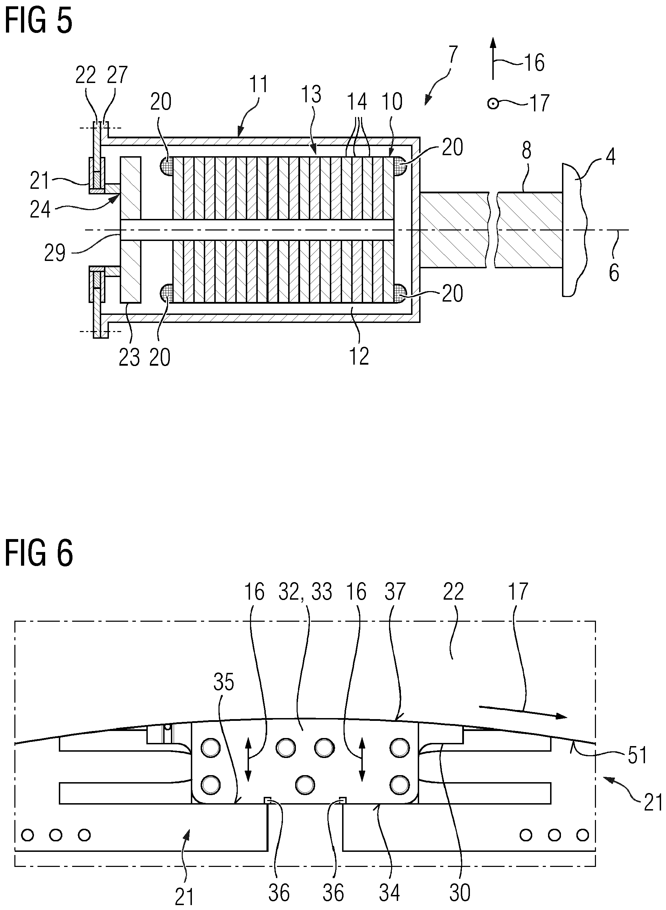

Fig. 5 shows another possible embodiment of the electric generator 7. The main difference between the embodiments of figures 3 and 5 is that, in fig. 3, the brake support plate 23 is realized by one of the stator plates 14, wherein, in fig. 5, the brake support plate 23 is a separate component with respect to the stator 10. The stator 10 and the brake support plate 23 are attached to a non-rotatably mounted shaft 29 of the electric generator 7. In the embodiment of fig. 5, the brake support plate 23 is a disk of metal having several, particularly three, plate wings extending along the radial direction 16, wherein on each of the plate wing one braking arrangement 21 is attached.

Next, again referring to fig. 4, details regarding the braking arrangement 21 are described. These details basically also hold true for the embodiment shown in fig. 5. The braking arrangement 21 is a caliper brake having two caliper brackets 30 which are adapted to frictionally interact with the brake disk 22 to slow down the relative rotation between the rotor 11 and the stator 10 or between the brake disk 22 and the brake support plate 23, respectively. For this, the braking arrangements 21 comprise an electromechanic actor, which is not explicitly shown in the figures, to shift the caliper brackets 30 along the axial direction such that braking pads 31 (not shown in fig. 4) get in frictional contact with the brake disk 22 which is arranged between the caliper brackets 30.

The braking arrangement 21 furthermore comprises a spacer element 32 for securing a specified distance between the caliper brackets 30. The spacer element 32 is a block-like component which is made of cast iron. Regarding the axial direction, the extension of the spacer element 32 is slightly smaller than the extension of the brake disk 22.

The electric generator 7 comprises an airgap securing element 33 which is adapted to get in contact with the brake disk 22 if the radial distance between the stator 10 and the rotor 11 is reduced below a predetermined reference value. Under certain conditions, e.g., under heavy loads acting on the components of the electric generator 7, the relative radial position between the stator 10 and the rotor 11 and, hence, between the brake disk 22 and airgap securing element 33 changes. Thus, also the width of the airgap 12 changes. In extreme cases, the width of the airgap 12 could become zero such that the stator 10 and the rotor 11 get in contact with each other which could cause a damage of the respective components. To avoid this, the airgap securing element 33 is provided. This element acts as a bearing element, wherein the airgap securing element 33 gets in contact with the brake disk 22 if the width of the airgap 12 falls below the or a predetermined reference value. In this case, a frictional contact between the airgap securing element 33 and the brake disk 11 occurs to prohibit a further decrease of the width of the airgap 12 and, hence, a contact between the stator 10 and the rotor 11.

With reference to figures 6 to 10, four different alternatives of the electric generator 7 are shown. Basically, each of these alternatives can be realized for the electric generator 7 according to both embodiments shown in figures 3 and 5, i.e., either for the embodiment where the brake support plate 23 is one of the stator plates 14 (fig. 3) or for the embodiment where the brake support plate 23 is a separate component with respect to the stator 10 (fig. 5).

Referring to fig. 6, a view of the braking arrangement 21 with respect to the first alternative is shown. The drawing plane of fig. 6 is perpendicular to the rotation axis 6 and to the axial direction, respectively. In fig. 6, one of the caliper brackets 30 is omitted such that the spacer element 32 becomes visible. According to this alternative, the airgap securing element 33 is a part of the braking arrangement 21. Concretely, the airgap securing element 33 is the spacer element 32. A radial outer surface 37 of the spacer element 32 gets in contact with an inner circumferential surface 51 of the brake disk 22 if the width of the airgap 12 falls below the predetermined reference value.

As can be seen from fig. 6, a radial inner surface 34 of the spacer element 32 is arranged on a bearing surface 35 of the braking arrangement 21. The bearing surface 35 comprises a drill hole 36 having an internal thread and a screw, exemplarily a grub screw, arranged therein, wherein screwing the screw leads to a movement of the screw along the radial direction 16. Hence, the length of a section of the screw which protrudes from the bearing surface 35 is adjustable by bringing the screw into the respective radial position. Thus, the radial position of the spacer element 32 is adjustable by screwing the screw, particularly before the spacer element 32 is mounted on its determined position. Alternatively, the radial inner surface 34 can comprise the drill hole 36 with the screw. Particularly regarding the manufacturing process of the electric generator 7, the drill hole 36 having the screw therein allows for an exact positioning of the spacer element 32 or the airgap securing element 33, respectively, regarding the radial direction 16.

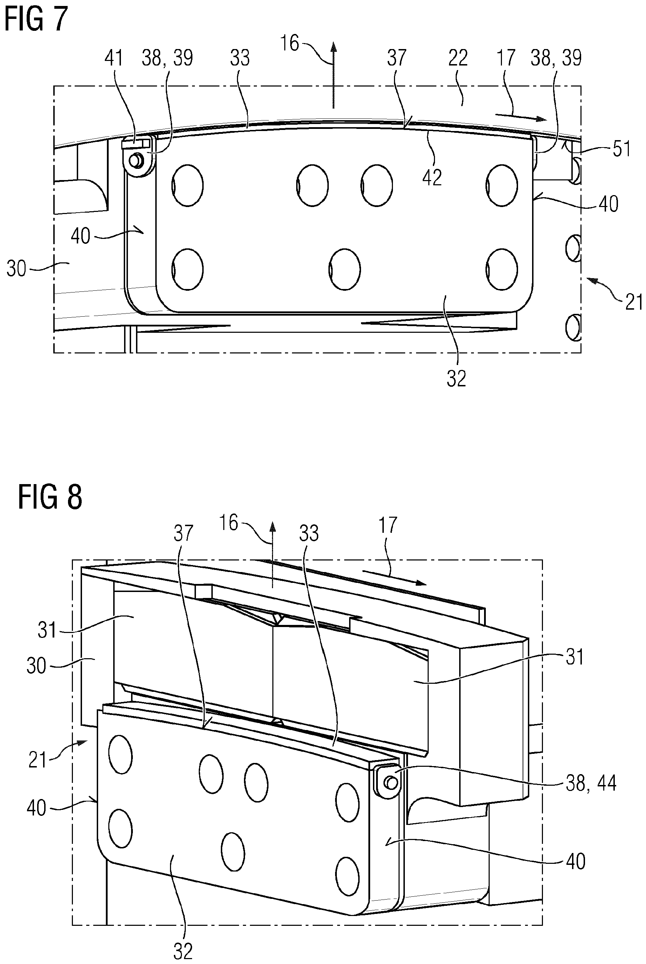

Fig. 7 shows aspects of the electric generator 7 regarding the second alternative, wherein a perspective view on the braking arrangement 21 is shown. One of the caliper brackets 30 and the part of the braking arrangement 21 having the bearing surface 35 are omitted in this figure. The second alternative differs from the first alternative by the aspect that the airgap securing element 33 is mounted on a part of the braking arrangement 21, namely on the spacer element 32. Concretely, the airgap securing element 33 is a stripe-like element made of a plastic material and arranged along an axial direction of the radial outer surface 37 of the spacer element 32. This axial direction extends along the circumferential direction 17.

A member 38 is arranged on each of the axial ends of the radial outer surface 37, wherein the airgap securing element 33 is attached to the spacer element 32 by the locking members 38 on the respective axial end. Concretely, each of the locking members 38 I a locking bracket 39, which is attached to the spacer element 32 on one of its lateral surfaces 40 by a screwing connection. The locking brackets 39 protrude radially outwards such that the respective axial end of the airgap securing element 33 is arranged in a slit 41 of the respective locking bracket 39.

To ensure that the airgap securing element 33 is arranged at a designated radial position, a shim 42 with a certain thickness or height with respect to the radial direction 16 is arranged between the airgap securing element 33 and the radial outer surface 37 of the spacer element 32. Additionally or alternatively, the aspects regarding the drilling hole 36 which have been explained above can be realized in this alternative.

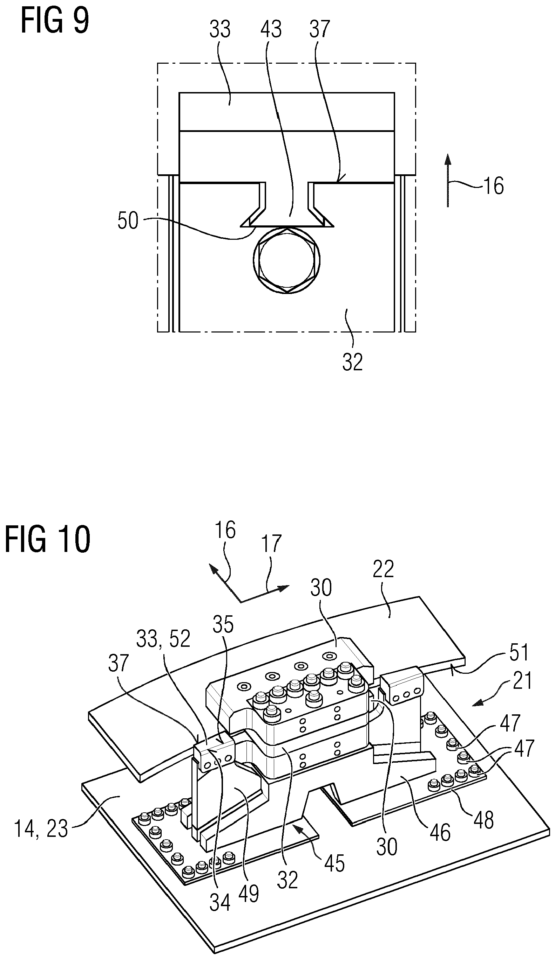

Next, referring to fig. 8, the third alternative of the electric generator 7 is described. In fig. 8, a perspective view of the braking arrangement 21 is shown, wherein, for a better visibility, one of the caliper brackets 30 and the brake disk 32 is omitted. This alternative is similar to the second alternative which has been explained with the help of fig. 7. However, there is the difference that the radial outer surface 37 of the spacer element 32 comprises a groove 50 which extends along the axial direction of the radial outer surface 37. The groove 50 is shown in fig. 9, which depicts a cross-sectional view through the spacer element 32 and the airgap securing element 33.

As can be seen from fig. 9, the airgap securing element 33 comprises a tongue 43 which is arranged in the groove 50. The cross sections of the groove 50 and the tongue 43 correspond to each other. Exemplarily, these cross sections get broader downwards with respect to the radial direction 16. Hence, these cross sections are dovetail-shaped.

Referring to fig. 8 again, in this alternative only one locking member 38 being a stopper 44 is provided at one of the opposed axial ends of the radial outer surface 37 which is directed towards the leading side regarding the rotation of the rotor 11. In other words, the stopper 44 is arranged on the lateral surface 40 of the spacer element 32 which is arranged in the direction of the rotational movement of the rotor 11. In fig. 8, the respective axial end of the radial outer surface 37 is located on the right side of this figure.

Alternatively, the locking members 38 which have been explained with the help of fig. 7 can be provided in this alternative. According to another option, additionally to the stopper 44, one locking member being the locking bracket 39 can be arranged at the other of the two opposed axial ends of the radial outer surface 37 which is directed away from the leading side regarding the rotation of the rotor 11.

Next, the fourth alternative of the electric generator 7 is described with the help of fig. 10. This figure shows a perspective view of the braking arrangement 21. Components of the braking arrangement 21, namely the caliper brackets 30 and the spacer element 32, are attached to the brake support plate 23 by a foot element 45. The foot element 45 comprises a base section 46 which is attached to the brake support plate 23, exemplarily by screwing means 47. For this, the base section 46 is connected with an attaching plate 48 of the foot element 45 which constitutes a large contact area between the foot element 45 and the brake support plate 23. The cross section of the base section 46 broadens towards the brake support plate 23. The base section 46 and the attaching plate 48 are exemplarily welded to each other. In this embodiment, the airgap securing element 33 is mounted on the foot element 45. Alternatively, it can be a part of the foot element 45. These aspects can also be realized for the other three alternatives.

Regarding the fourth alternative, a, particularly wing-shaped, carrier element 49 is mounted on the foot element 45, exemplarily on the base section 46. A block-like shoe element 52 which is made of a cast iron and which realizes the airgap securing element 33 is attached to the carrier element 49. According to this alternative, the radial outer surface 37 of the shoe element 52 gets in contact with the inner circumferential surface 51 of the brake disk 22 if the width of the airgap 12 falls below the predetermined reference value.

A radial inner surface 34 of the shoe element 52 is arranged on a bearing surface 35 of the carrier element 49. The bearing surface 35 comprises a drill hole 36 having the internal thread and the screw (not visible in fig. 10). As it has been explained with respect to the first alternative, also in this alternative the radial position of the airgap securing element 33 is adjustable by screwing the screw. Alternatively, the radial inner surface 34 can comprise the drill hole 36 with the screw.

Referring to fig. 10 again, in this alternative it is possible that the airgap securing element 33 is the stripe-like element made of a plastic material instead, wherein the airgap securing element 33 is arranged along the axial direction of the radial outer surface 37 of the shoe element 52. All aspects which have been explained with respect to the second alternative can be applied to this alternative as well, particular regarding the locking member(s) 38 and/or the shim(s) 42 being arranged between the airgap securing element 33 and the radial outer surface 37 of the shoe element 52.

Although the present invention has been described in detail with reference to the preferred embodiment, the present invention is not limited by the disclosed examples from which the skilled person is able to derive other variations without departing from the scope of the invention.

## Claims

1. Electric generator for a wind turbine (1), comprising at least one brake support plate (23) having at least one braking arrangement (21) mounted thereon, a rotor (11) which is rotatably mounted with respect to the brake support plate (23), wherein the at least one braking arrangement (21) is adapted to interact with at least one brake disk (22) which is attached to the rotor (11) to brake a relative rotation between the rotor (11) and the at least one brake support plate (23), wherein an airgap securing element (33) is mounted on the brake support plate (23) and adapted to get in contact with the at least one brake disk (22) if a distance between the at least one brake disk (22) and the brake support plate (23) and/or between a stator (10) of the electric generator (7) and the rotor (11) is reduced below a predetermined reference value, **characterized in that** the at least one airgap securing element (33) is mounted on or is a part of the at least one braking arrangement (21).

2. Electric generator according to claim 1, **characterized in that** the at least one braking arrangement (21) comprises two caliper brackets (30) having a part of the brake disk (22) in between and being adapted to frictionally interact with the brake disk (22) to brake the relative rotation between the rotor (11) and the at least one brake support plate (23).

3. Electric generator according to claim 2, **characterized in that** the at least one braking arrangement (21) comprises a spacer element (32) for securing a specified distance between the caliper brackets (30), wherein the at least one airgap securing element (33) is mounted on or at least a part of the spacer element (32).

4. Electric generator according to one of the preceding claims, **characterized in that** at least one component of at least one of the at least one braking arrangement (21) is mounted to the brake support plate (23) by a, particularly towards to the respective brake support plate (23) broadening, foot element (45) which comprises at least one, particularly wing-shaped, carrier element (49), wherein a shoe element (52) is arranged on the carrier element (49) and the at least one airgap securing element (33) is mounted on or is at least a part of the shoe element (52).

5. Electric generator according to claim 3 or 4, **characterized in that** at least one of the at least one airgap securing element (33) is block-like and realized by the spacer element (32) or by the shoe element (52).

6. Electric generator according to one of the claims 3 to 5, **characterized in that** at least one of the at least one airgap securing element (33) is stripe-like and arranged along an axial direction of a radial outer surface (37) of the spacer element (32) or of the shoe element (52).

7. Electric generator according to claim 6, **characterized in that** a locking member (38) is arranged on one of the axial ends of the radial outer surface (37), wherein at least one of the at least one airgap securing element (33) is attached to the spacer element (32) or to the shoe element (52) by the locking member (38) on one of its axial ends.

8. Electric generator according to claim 7, **characterized in that** either
- two locking members (38) being locking brackets (39) are arranged at two opposed axial ends of the radial outer surface (37), wherein the locking brackets (39) attach the at least one airgap securing element (33) at these positions to the spacer element (32) or to the shoe element (52) or
- one locking member (38) being a locking bracket (39) is arranged at one of the two opposed axial ends of the radial outer surface (37) which is directed away from a leading side regarding the rotation of the rotor (11) or
- one locking member (38) being a stopper (44) for blocking a movement of the at least one airgap securing element (33) along a circumferential direction (17) of the rotor (11) is arranged at one of the two opposed axial ends of the radial outer surface (37) which is directed towards a leading side regarding the rotation of the rotor (11).

9. Electric generator according to one of the claims 6 to 8, **characterized in that** between at least one of the at least one airgap securing element (33) and the radial outer surface (37) at least one shim (42) is arranged such that the at least one airgap securing element (33) is arranged at a designated radial position.

10. Electric generator according to one of the claims 6 to 9, **characterized in that** the radial outer surface (37) comprises at least one groove (50) extending along the axial direction of the radial outer surface (37), wherein the at least one airgap securing element (33) comprises at least one tongue (43) being arranged in the at least one groove (50), wherein the cross sections of the at least one groove (50) and the at least one tongue (43) correspond to each other, wherein these cross sections are particularly dovetail-shaped.

11. Electric generator according to one of the claims 3 to 10, **characterized in that** either
- a radial inner surface (34) of the spacer element (32) is arranged on a bearing surface (35) of the at least one braking arrangement (21) or
- a radial inner surface (34) of the shoe element (52) is arranged on a bearing surface (35) of the carrier element (49),
wherein the bearing surface (35) or the radial inner surface (34) comprises at least one drill hole (36) having an internal thread and a screw arranged therein, wherein the radial position of the airgap securing element (33) is adjustable by screwing the screw.

12. Electric generator according to one of the preceding claims, **characterized in that** at least one of the at least one airgap securing element (33), particularly the block-like airgap securing element (33), is made of cast iron and/or that at least one of the at least one airgap securing element (33), particularly the stripe-like airgap securing element (33), is made of a plastic material.

13. Electric generator according to one of the preceding claims, **characterized in that** the stator (10) is an inner stator and the rotor (11) is a rotatably mounted outer rotor, wherein the at least one brake support plate (23) is either
- one of several laminated stator plates (14) which constitute an iron core (13) of the stator (10) or
- a separate component with respect to the stator (10) .

14. Component, particularly inner stator (10), for an electric generator (7) for a wind turbine (1), comprising at least one brake support plate (23) having at least one braking arrangement (21) mounted thereon, wherein the at least one braking arrangement (21) is adapted to interact with at least one brake disk (22) which is attached to a rotor (11) of the electric generator (7) which is rotatably mounted with respect to the brake support plate (23) to brake a relative rotation between the rotor (11) and the at least one brake support plate (23), wherein an airgap securing element (33) is mounted on the brake support plate (23) and adapted to get in contact with the at least one brake disk (22) if a distance between the at least one brake disk (22) or the stator (10) and the rotor (11) is reduced below a predetermined reference value, **characterized in that** the at least one airgap securing element (33) is mounted on or a part of the at least one braking arrangement (21).

15. Wind turbine, comprising at least one electric generator (7) according to one of the claims 1 to 13.
